# EUROPEAN PATENT APPLICATION

(11) **EP 4 760 939 A1**
(43) Date of publication of application: **17.06.2026**
(21) Application number: 24874880.8
(22) Date of filing: 12.09.2024
(51) Int. Cl.: H01M 50/342, H01M 50/105, H01M 50/184, H01M 50/383

(54) **SECONDARY BATTERY AND MANUFACTURING METHOD THEREFOR**

(30) Priority: 06.10.2023 KR 20230133675; 18.01.2024 KR 20240008148
(71) Applicant: LG Energy Solution, Ltd., Seoul 07335 (KR)
(72) Inventor: LEE, Young Shin, Daejeon 34122 (KR); OH, Sang Seung, Daejeon 34122 (KR)
(74) Representative: Goddar, Heinz J.
(86) International application number: PCT/KR2024/013951
(87) International publication number: WO 2025/075322

(57) **Abstract**

A secondary battery according to an embodiment of the present disclosure may include an electrode assembly; a battery case including an accommodation portion accommodating the electrode assembly, and a side portion located at an outer side of the accommodation portion and folded at least once; and a fixing member attached to the battery case and configured to fix the side portion in the folded state. The fixing member may have a cut-off line to allow the fixing member to easily rupture when an external force is applied to the fixing member.

## Description

### TECHNICAL FIELD

### CROSS-REFERENCE TO RELATED APPLICATIONS

The present application claims priority to Korean Patent Application No. 10-2023-0133675 filed on October 6, 2023 and Korean Patent Application No. 10-2024-0008148 filed on January 18, 2024 in the Republic of Korea, the disclosures of which are incorporated herein by reference.

### TECHNICAL FIELD

The present disclosure relates to a secondary battery and a method for manufacturing the same, and more particularly, to a secondary battery in which a terrace portion folded at least once is fixed by a fixing member and a method for manufacturing the same.

### BACKGROUND ART

As opposed to primary batteries, secondary batteries can be recharged and may be used in a wide range of applications such as digital cameras, mobile phones, laptop computers and hybrid electric vehicles. Secondary batteries may include nickel-cadmium batteries, nickel-metal hydride batteries, nickel-hydrogen batteries, and lithium secondary batteries.

Among secondary batteries, many studies are being conducted on lithium secondary batteries having high energy density and discharge voltage, and recently, lithium secondary batteries are used in the form of a module by connecting pouch-type secondary batteries having flexibility.

Secondary batteries may use various types of battery cases as an outer packaging material that covers an electrode assembly, and for example, may use a pouch-type battery case or a can-type battery case. The electrode assembly has a structure in which a positive electrode plate and a negative electrode plate coated with an electrode active material and a separator interposed between the positive electrode plate and the negative electrode plate are stacked. A positive tab is formed at one side of the positive electrode plate, and a negative tab is formed at one side of the negative electrode plate. Each of the tabs is connected to an electrode lead for connection to an external circuit. The electrode assembly is sealed by the outer packaging material or the battery case.

The battery case may include an accommodation portion in which the electrode assembly is received, and a terrace portion located at the periphery of the accommodation portion and sealing the electrode assembly. Additionally, a part of the terrace portion may be folded to increase energy density.

For example, the terrace portion may be Single Side Folded (SSF) or Double Side Folded (DSF). When a predetermined amount of time passes by, the terrace portion is not kept in the folded state and a part of the terrace portion may be unfolded and protruded outwards, and to prevent this, the terrace portion may be fixed in the folded state using a fixing member such as a tape.

However, when flames or gases are produced by abnormal operation of any secondary battery, due to the fixing member, the flames or gases are vented via the electrode lead, not the folded terrace portion.

In a battery module or a battery pack, when flames or gases produced from any one battery cell are vented via the electrode lead, the flames rapidly spread out, causing thermal runaway in adjacent battery cells, and accordingly there is a need for a solution.

### SUMMARY

### TECHNICAL PROBLEM

The present disclosure is directed to providing a secondary battery for rapidly venting flames or gases and a method for manufacturing the same.

### TECHNICAL SOLUTION

A secondary battery according to an embodiment of the present disclosure may include an electrode assembly; a battery case including an accommodation portion accommodating the electrode assembly, and a side portion located at an outer side of the accommodation portion and folded at least once; and a fixing member attached to the battery case and configured to fix the side portion in the folded state. The fixing member may have a cut-off line to allow the fixing member to easily rupture when an external force is applied to the fixing member.

The cut-off line may be formed by forming a hole in the fixing member at a predetermined interval in a direction.

The cut-off line may be extended in a length direction of the side portion.

The fixing member may further have a sub cut-off line extended in a direction crossing the cut-off line.

The sub cut-off line may be formed at a predetermined interval in an extension direction of the cut-off line.

The cut-off line may be formed at a location corresponding to a gap or a boundary between the accommodation portion and the side portion.

The fixing member may include a first adhesion portion adhered to the accommodation portion; a second adhesion portion adhered to the side portion; and a connection portion connecting the first adhesion portion to the second adhesion portion.

The cut-off line may be formed in the connection portion.

The connection portion may include a first connection portion located at a side where the side portion is folded and having the cut-off line; and a second connection portion located at an opposite side to the first connection portion with respect to the second adhesion portion.

A method for manufacturing a secondary battery according to an embodiment of the present disclosure may include the steps of folding a side portion of a battery case accommodating an electrode assembly at least once; preparing a fixing member having a cut-off line along a preset direction; and attaching the fixing member to the battery case to fix the side portion in a folded state.

The step of attaching the fixing member may include attaching the fixing member such that the cut-off line is parallel to a length direction of the side portion.

The step of attaching the fixing member may include attaching the fixing member such that the cut-off line corresponds to a gap or a boundary between the accommodation portion accommodating the electrode assembly and the side portion.

### ADVANTAGEOUS EFFECTS

According to an exemplary embodiment of the present disclosure, when a fire occurs in the secondary battery, the fixing member that fixes the side portion may easily rupture, and gases and flames may be quickly vented through the unsealed side portion.

Additionally, during abnormal operation of the secondary battery, the side portion may be kept in the folded state by the fixing member with reliability.

Additionally, it may be possible to prevent or delay the venting of gases or flames via the electrode lead. Accordingly, in the battery module, it may be possible to minimize thermal runaway in adjacent secondary batteries due to rapid flame propagation.

Besides, the effects of the present disclosure may include effects that can be easily predicted by those skilled in the art from the exemplary embodiments of the present disclosure.

### BRIEF DESCRIPTION OF THE DRAWINGS

The accompanying drawings illustrate the exemplary embodiments of the present disclosure and together with the following detailed description, serve to provide a better understanding of the technical aspect of the present disclosure, and thus the present disclosure should not be construed as being limited to the drawings.
FIG. 1 is an exploded view of a secondary battery according to an embodiment of the present disclosure.
FIG. 2 is a plan view of a secondary battery according to an embodiment of the present disclosure.
FIG. 3 is a cross-sectional view of FIG. 2, taken along the line A-A'.
FIG. 4 is a plan view of a secondary battery according to another embodiment of the present disclosure.
FIG. 5 is a flowchart of a method for manufacturing a secondary battery according to still another embodiment of the present disclosure.

### DETAILED DESCRIPTION

Hereinafter, the exemplary embodiments of the present disclosure will be described in sufficient detail with reference to the accompanying drawings to enable persons having ordinary skill in the technical field pertaining to the present disclosure to easily carry out the present disclosure. However, the present disclosure may be embodied in many different forms and is not limited or restricted by the following embodiments.

To clearly describe the present disclosure, an irrelevant description or a detailed description of related known technology that may unnecessarily obscure the gist of the present disclosure is omitted, and in affixing the reference numerals to the elements in each drawing, the identical or similar reference numerals are affixed to the identical or similar elements throughout the specification.

Additionally, the terms or words used in the specification and the appended claims should not be construed as limited to general and dictionary meanings, but rather interpreted based on the meanings and concepts corresponding to the technical aspect of the present disclosure on the basis of the principle that the inventor is allowed to define the terms appropriately for the best explanation.

The drawings schematically show each component of a secondary battery according to an embodiment of the present disclosure, and the size of the component or the thickness of the line may be represented in a slightly exaggerated way for convenience of understanding.

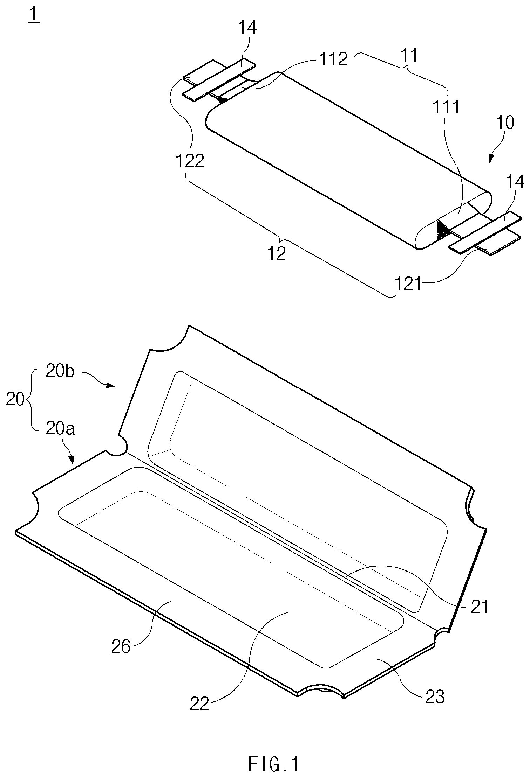

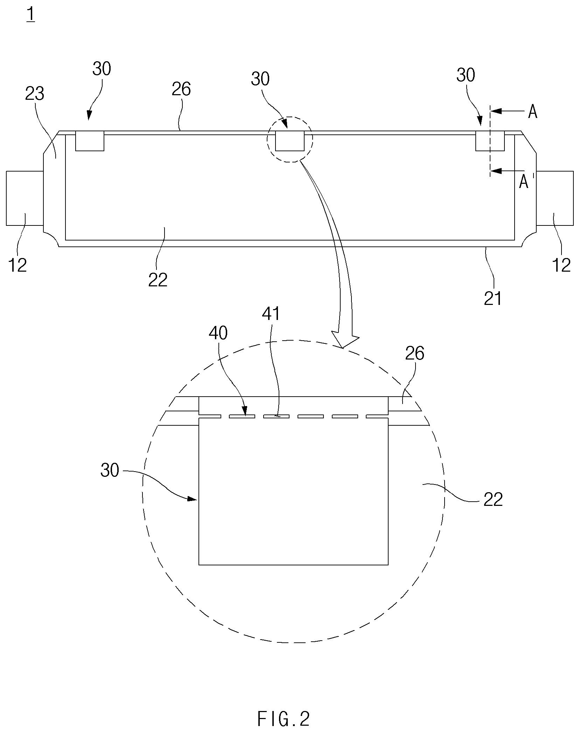

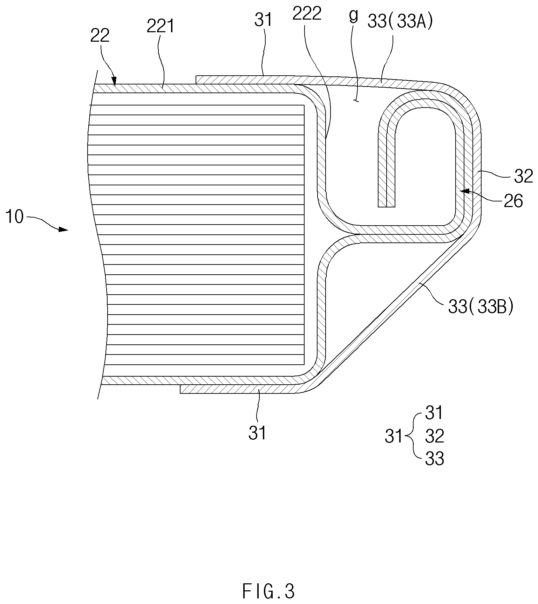

FIG. 1 is an exploded view of a secondary battery according to an embodiment of the present disclosure, FIG. 2 is a plan view of the secondary battery according to an embodiment of the present disclosure, and FIG. 3 is a cross-sectional view of FIG. 2, taken along the line A-A'.

The secondary battery 1 according to an embodiment of the present disclosure may include an electrode assembly 10 and a battery case 20. Hereinafter, as shown in the drawings, description is made based on the case in which the battery case 20 is a pouch-type battery case. However, the scope of the present disclosure is not limited thereto.

The electrode assembly 10 may be formed by stacking a positive electrode and a negative electrode in an alternating manner with a separator interposed between the positive electrode and the negative electrode. That is, the electrode assembly 10 may include the plurality of electrodes and the separator interposed between the plurality of electrodes to insulate the plurality of electrodes. The electrode assembly 10 may be accommodated in the battery case 20, more specifically, an accommodation portion 22 as described below together with an electrolyte solution.

The electrode assembly 10 may come in various types, for example, a stack type, a jellyroll type, a stack and folding type and so on, and the type of the electrode assembly 10 is not limited to a particular one.

The electrode assembly 10 may include an electrode tab 11. The electrode tab 11 may be connected to each of the positive electrode and the negative electrode of the electrode assembly 10 and protruded outward from the electrode assembly 10 to act as a path of movement of electrons between the inside and outside of the electrode assembly 10.

The electrode tab 11 may be formed by tailoring an uncoated portion of an electrode current collector or connecting a conductor member to the uncoated portion by ultrasonic welding.

The electrode tab 11 may include a positive tab 111 connected to the positive electrode, and a negative tab 112 connected to the negative electrode. Each of the positive tab 111 and the negative tab 112 may be protruded in each different direction of the electrode assembly 10, but is not limited thereto, and may be protruded toward various directions. For example, the positive tab 111 and the negative tab 112 may be protruded from one side in parallel in the same direction.

An electrode lead 12 may be connected to the electrode tab 11 of the electrode assembly 10 to supply electricity to the outside of the secondary battery 1. Additionally, a part of the electrode lead 12 may be surrounded by an insulation portion 14. The insulation portion 14 may be sealed together with a first case 21 and a second case 22. Accordingly, the insulation portion 14 may insulate the electrode lead 12 from the battery case 20, and maintain the sealing of the battery case 20. The insulation portion 14 generally includes an insulating tape that is easy to attach to the electrode lead 12 and has a relatively small thickness, but is not limited thereto, and may include various members that can insulate the electrode lead 12.

One end of the electrode lead 12 may be connected to the electrode tab 11 and the other end may be protruded outward from the battery case 13. The electrode lead 12 may include a positive lead 121 connected to the positive tab 111, and a negative lead 122 connected to the negative tab 112.

The electrode lead 12 may electrically connect the electrode assembly 10 to the outside. Additionally, because each of the positive tab 111 and the negative tab 112 is protruded toward various directions, each of the positive lead 121 and the negative lead 122 may be also extended toward various directions.

The battery case 20 may accommodate the electrode assembly 10 therein. In particular, the pouch-type battery case may be formed by forming a laminate sheet. More specifically, when drawing the laminate sheet having flexibility using a die and a punch, a part of the laminate sheet may be stretched to form the accommodation portion 22 having a pocket-shaped accommodation space, thereby manufacturing the battery case 20.

The battery case 20 may accommodate the electrode assembly 10 such that a part of the electrode lead 12 is exposed and may be sealed.

The battery case 20 may include the accommodation portion 22 and terrace portions 23, 26 located at the outer side of the accommodation portion 22.

More specifically, the battery case 20 may include the first case 20a and the second case 20b, and at least one of the first case 20a or the second case 20b may have the accommodation portion 22. Additionally, an area around the accommodation portion 22 may form the terrace portions 23, 26.

The first case 20a and the second case 20b may be connected to each other by a folding portion 21. However, the present disclosure is not limited thereto, and the first case 20a and the second case 20b may be separated and each may be separately manufactured.

The accommodation portion 22 may define the accommodation space for accommodating the electrode assembly 10. The accommodation portion 22 may have a pocket shape.

The following description is made, taking the first case 20a and the second case 20b, each having the accommodation portion 22 as an example. Those skilled in the art will easily understand that any one of the pair of cases 20a, 20b has the accommodation portion 22.

The accommodation portions 22 of the pair of cases 20a, 20b may be disposed facing each other and may accommodate the electrode assembly 10 together. That is, the accommodation portions 22 of the pair of cases 20a, 20b may be disposed facing each other to define the accommodation space accommodating the electrode assembly 10. In this case, compared with when any one of the pair of cases 20a, 20b has the accommodation portion 22, the electrode assembly 20 may accommodate the electrode assembly 10 having a large thickness and high capacity.

The first case 20a and the second case 20b may be connected with the folding portion 21. When the first case 20a and the second case 20b are unfolded, a part of the folding portion 21 may be located between the accommodation portion 22 of the first case 20a and the accommodation portion 22 of the second case 20b, and the other part of the folding portion 21 may be located between the terrace portions 23, 26 of the first case 20a and the terrace portions 23, 26 of the second case 20b.

When the folding portion 21 is folded, the first case 20a and the second case 20b may face each other. The folding portion 21 may be extended parallel to the length direction of the electrode assembly 10 but is not limited thereto.

Each case 20a, 20b may include the terrace portions 23, 26 located around the accommodation portion 22. More specifically, the terrace portions 23, 26 may include the first terrace portion 23 where the electrode lead 12 is protruded, and the second terrace portion 26 which is folded at least once.

As an example, as shown in FIGS. 1 and 2, the first terrace portion 23 may include a pair of first terrace portions located at two sides of the accommodation portion 22 in the length direction, and the second terrace portion 26 may connect the pair of first terrace portions 23 and be located at one side of the accommodation portion 22 in the width direction. In this case, the first terrace portion 23 may be extended in the width direction of the accommodation portion 22, and the second terrace portion 26 may be extended in the length direction of the accommodation portion 22.

As another example, when the first case 20a and the second case 20b are separate members not connected by the folding portion 21, the first terrace portion 23 may include a pair of first terrace portions located at two sides of the accommodation portion 22 in the length direction, and the second terrace portion 26 may include a pair of second terrace portions connecting the pair of first terrace portions 23 and located at two sides of the accommodation portion 22 in the width direction.

When the first case 20a and the second case 20b are connected with the folding portion 21, any one of the first terrace portion 23 and the second terrace portion 26 may be located at the opposite side to the folding portion 21 with respect to the accommodation portion 22.

As an example, as shown in FIGS. 1 and 2, the second terrace portion 26 may be located at the opposite side to the folding portion 21 with respect to the accommodation portion 22. In this case, the pair of first terrace portions 23 may connect the folding portion 21 to the second terrace portion 26. That is, the pair of electrode leads 12 may be extended in the opposite directions and protruded outwards through each first terrace portion 23.

As another example, the first terrace portion 26 may be located at the opposite side to the folding portion 21 with respect to the accommodation portion 22. That is, the pair of electrode leads 12 may be extended parallel to each other in a direction facing away from the folding portion 21 and protruded outwards through the first terrace portion 23. In this case, the second terrace portion 26 may include a pair of second terrace portions, and connect the folding portion 21 to the first terrace portion 23.

As described above, the extension direction and location of the first terrace portion 23 and the second terrace portion 26 are not limited to particular ones, and may change according to circumstances.

When the folding portion 21 is folded, the terrace portions 23, 26 of the first case 20a and the second case 20b may contact each other. In this instance, the insulation portion 14 of the electrode assembly 10 may be located between the terrace portions 23, 26 of the pair of cases 20a, 20b. For example, the insulation portion 14 may be located between the first terrace portions 23 of the pair of cases 20a, 20b.

The terrace portions 23, 26 of the first case 20a and the second case 20b may be sealed with each other. The first terrace portions 23 of the first case 20a and the second case 20b may be sealed with each other, and their parts may be sealed with the insulation portion 14. The second terrace portions 26 of the first case 20a and the second case 20b may be sealed with each other.

At least parts of the sealed terrace portions 23, 26 may be folded at least once. More specifically, the second terrace portion 26 may be folded at least once. The second terrace portion 26 may be Single Side Folded (SSF) or Double Side Folded (DSF). Hereinafter, the second terrace portion 26 is referred to as a side portion and indicated by the same reference numeral '26'.

The secondary battery 1 may include a fixing member 30.

The fixing member 30 may be attached to the battery case 20 and fix the side portion 26 in the folded state. For example, the fixing member 30 may be a tape.

In this embodiment, the fixing member 30 may include a plurality of fixing members. The plurality of the fixing members 30 may be arranged at a predetermined interval in the length direction of the side portion 30. The plurality of fixing members 330 may have equal length but is not limited thereto.

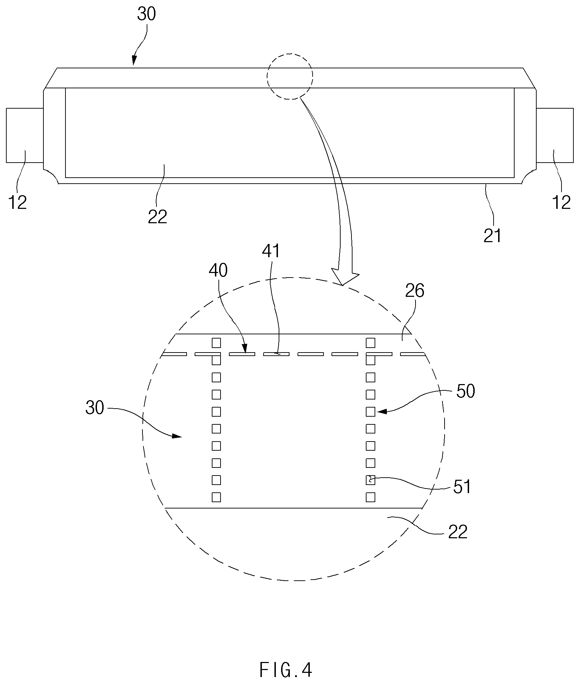

Referring to FIG. 4, each fixing member 30 may include a first adhesion portion 31 adhered to the accommodation portion 22, a second adhesion portion 32 adhered to the side portion 26, and a connection portion 33 connecting the first adhesion portion 31 and the second adhesion portion 32.

The first adhesion portion 31 may be located at the end of the fixing member 30. The first adhesion portion 31 may be adhered to a bottom surface 221 of the accommodation portion 22.

The second adhesion portion 32 may be adhered outside of the side portion 26.

The connection portion 33 may be located between the first adhesion portion 31 and the second adhesion portion 32. The connection portion 33 may have a cut-off line 40 as described below.

As shown in FIG. 4, each of two end portions of the fixing member 30 may be adhered to each accommodation portion 22. The side portion 26 may be folded toward one accommodation portion 22. In this case, the first adhesion portion 31 may include a pair of first adhesion portions, and the connection portion 33 may also include a pair of connection portions. More specifically, any one of the pair of first adhesion portions 31 may be adhered to one accommodation portion 22, and the other may be adhered to the other accommodation portion 22.

The connection portion 33 may include a first connection portion 33A and a second connection portion 33B. The first connection portion 33A may connect any one of the pair of first adhesion portions 31 to the second adhesion portion 32. The first connection portion 33A may be located at the side where the side portion 26 is folded. The first connection portion 33A may have the cut-off line 40 as described below. The second connection portion 33B may connect the other of the pair of first adhesion portions 31 to the second adhesion portion 32. The second connection portion 33B may be located at the opposite side to the first connection portion 33A with respect to the second adhesion portion 32. The second connection portion 33B may also have the cut-off line 40 as described below.

However, as opposed to FIG. 4, one end portion of the fixing member 30 may be adhered to one accommodation portion 22, and the other end portion may be adhered to the side portion 26. That is, the first adhesion portion 31 may be located at one end portion of the fixing member 30, and the second adhesion portion 32 may be located at the other end portion of the fixing member 30. In this case, the connection portion 33 may be located at the side where the side portion 26 is folded.

Meanwhile, when a fire occurs in the electrode assembly 10, the battery case 20 may be damaged and gases may be released together with sparks or particles. In this instance, when the gases are vented via the electrode lead 12, there is a risk that heat and flames will spread to adjacent other secondary batteries fast. To reduce or prevent this risk, it is preferable that sealing is first broken at the side portion 26 to vent the gases, but the fixing member 30 may be an obstacle.

To solve this problem, the fixing member 30 may have the cut-off line 40 to allow the fixing member 30 to easily rupture when external forces are applied to the fixing member 30.

In the case of this embodiment, at least one of the plurality of fixing members 30 may have the cut-off line 40. Preferably, each fixing member 30 may have the cut-off line 40.

When high temperature gases are produced by abnormal operation of the electrode assembly 10, the pressure in the battery case 20 may rise. In this instance, when the folded side portion 26 is unfolded, external forces may be applied to the fixing member 30. That is, tensile forces act on the fixing member 30. When higher external forces than a predetermined level act on the fixing member 30, rupture may first occur at the cut-off line 40. Accordingly, the side portion 26 may be unfolded and unsealed, and gases and flames in the battery case 20 may be quickly vented.

The cut-off line 40 may be extended in the length direction of the side portion 26 (for example, the length direction of the accommodation portion 22). The cut-off line 40 may be extended from one edge to the opposite edge of the fixing member 30.

The cut-off line 40 may be formed by forming a hole 41 in the fixing member 30 at the predetermined interval in a direction. The above-described direction may be parallel to the length direction of the side portion 26. Each hole 41 may be a long hole extended in the above-described direction.

However, the configuration of the cut-off line 40 is not limited thereto, and the cut-off line 40 may be designed to rupture more easily than the surroundings. For example, a part of the fixing member 30 may have a smaller thickness than the surroundings, and the corresponding part may form the cut-off line 40.

The cut-off line 40 may be formed at a location corresponding to a gap (g) or a boundary between the accommodation portion 22 and the side portion 26.

More specifically, the side portion 26 may form the predetermined gap (g) with an outer periphery 222 of the accommodation portion 22. In this case, the cut-off line 40 may be formed at the location corresponding to the gap (g) between the accommodation portion 22 and the side portion 26.

However, the side portion 26 does not form the predetermined gap with the accommodation portion 22, and may contact the outer periphery 222 of the accommodation portion 22. In this case, the cut-off line 40 may be formed at the location corresponding to the boundary between the accommodation portion 22 and the side portion 26.

That is, the cut-off line 40 may be formed in the connection portion 33 of the fixing member 30 described previously. Accordingly, when higher external forces than the predetermined level are applied to the fixing member 30, the cut-off line 40 may easily rupture. When the cut-off line 40 is formed in the first adhesion portion 31 or the second adhesion portion 32 of the fixing member 30, the cut-off line 40 may not first rupture.

The cut-off line 40 may be formed in the first connection portion 33A of the fixing member 30 described previously. In relation to this, when the side portion 26 is unfolded by high pressure in the battery case 20, higher tensile forces are applied to the first connection portion 33A of the fixing member 30, and lower tensile forces are applied to the second connection portion 33B. Accordingly, the cut-off line 40 formed in the first connection portion 33A may rupture more easily. However, the cut-off line may be formed in not only the first connection portion 33A but also the second connection portion 33B.

FIG. 4 is a plan view of the secondary battery according to another embodiment of the present disclosure.

Hereinafter, the overlapping description with the foregoing description is omitted and difference(s) will be described.

The fixing member 30 of the secondary battery according to this embodiment may be extended along the length direction of the side portion 26. For example, the fixing member 30 may be a single member extended along the length direction of the side portion 26 as shown in FIG. 4. Accordingly, the fixing member 30 may not completely rupture.

To make the fixing member 30 rupture more easily, the fixing member 30 may further have a sub cut-off line 50 extended in a direction crossing the cut-off line 40. More specifically, the sub cut-off line 50 may be formed in a direction perpendicular to the cut-off line 40.

The sub cut-off line 50 may be formed at a predetermined interval in the extension direction of the cut-off line 40. That is, the sub cut-off line 50 may be formed at the predetermined interval in the length direction of the extension portion 26.

The sub cut-off line 50 may be formed by forming a hole 51 in the fixing member 30 at the predetermined interval in a direction. The above-described direction may be parallel to the direction in which the fixing member 30 covers the side portion 26.

However, the configuration of the sub cut-off line 50 is not limited thereto, and the sub cut-off line 50 may be designed to rupture more easily than the surroundings. For example, a part of the fixing member 30 may have a smaller thickness than the surroundings, and the corresponding part may form the sub cut-off line 50.

The sub cut-off line 50 may be formed in the connection portion 33, in particular, the first connection portion 33A of the fixing member 30. Preferably, the sub cut-off line 50 may be extended from one edge to the opposite edge of the fixing member 30.

Meanwhile, the fixing member 30 of the secondary battery 1 according to the previous embodiment may also have the sub cut-off line 50.

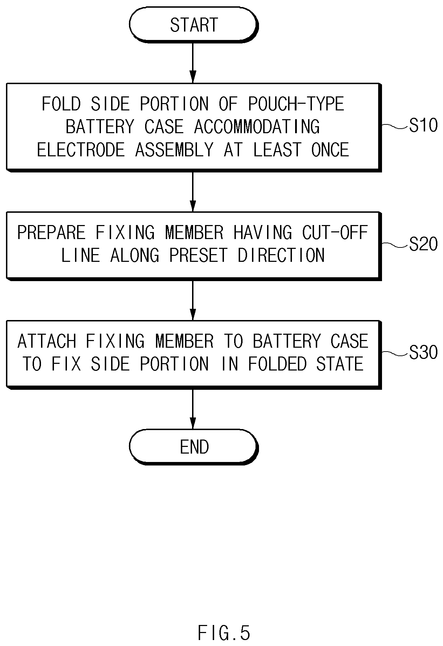

FIG. 5 is a flowchart of a method for manufacturing the secondary battery according to still another embodiment of the present disclosure.

Hereinafter, the method for manufacturing the secondary battery 1 according to an embodiment or another embodiment as described previously will be described as still another embodiment of the present disclosure.

The method for manufacturing the secondary battery according to still another embodiment of the present disclosure may include the step S10 of folding the side portion 26 of the battery case 20 accommodating the electrode assembly 10 at least once, the step S20 of preparing the fixing member 30 having the cut-off line 40 along the preset direction, and the step S30 of attaching the fixing member 30 to the battery case 20 to fix the side portion 26 in the folded state.

The step S10 of folding the side portion 26 may include preparing the secondary battery 1 in which the electrode assembly 10 is accommodated in the accommodation portion 22 and the terrace portions 23, 26 of the battery case 20 are sealed. Subsequently, the second terrace portion 26 or the side portion 26 of the battery case 20 may be folded toward the accommodation portion 22 at least once. The side portion 26 may be Single Side Folded (SSF) or (Double Side Folded (DSF).

The step S20 of preparing the fixing member 30 may include forming the cut-off line 40 in the fixing member 30. Additionally, the sub cut-off line 50 that crosses the cut-off line 40 may be further formed in the fixing member 30. The cut-off line 40 and the sub cut-off line 50 may be formed by forming the holes 41, 51 in the fixing member 30 at the predetermined interval in one direction. However, the configuration of the cut-off line 40 and the sub cut-off line 50 is not limited thereto, and the cut-off line 40 and the sub cut-off line 50 may be designed to rupture more easily than the surroundings.

The step S30 of attaching the fixing member 30 may include adhering the two end portions of the fixing member 30 to the accommodation portion 22, more specifically, the bottom surface 221 of the accommodation portion 22. However, the present disclosure is not limited thereto, and one end portion of the fixing member 30 may be adhered to the accommodation portion 22, more specifically, the bottom surface 221 of one accommodation portion 22, and the other end portion of the fixing member 30 may be adhered to the side 26.

The step S30 of attaching the fixing member 30 may include attaching the fixing member 30 such that the cut-off line 40 is parallel to the length direction of the side portion 26. The fixing member 30 may be attached such that the cut-off line 40 corresponds to the gap (g) or the boundary between the accommodation portion 22 and the side portion 26. That is, the fixing member 30 may be attached such that the cut-off line 40 is located at the connection portion 33, in particular, the first connection portion 33A of the fixing member 30.

Through the series of steps, the secondary battery 1 may be manufactured. Subsequently, when high temperature gases are produced by abnormal operation of the electrode assembly 10, the pressure in the battery case 20 rises. In this instance, when the folded side portion 26 is unfolded, external forces (tensile forces) may be applied to the fixing member 30. When higher external forces than the predetermined level act on the fixing member 30, the cut-off line 40 may first rupture. Accordingly, the side portion 26 may be unfolded and unsealed, and gases and flames in the battery case 20 may be quickly vented.

The foregoing description has been made to describe the technical aspect of the present disclosure by way of example, and persons having ordinary skill in the technical field pertaining to the present disclosure would have made a variety of modifications and changes without departing from the essential features of the present disclosure.

Therefore, the disclosed embodiments are provided to describe the technical aspect of the present disclosure and not intended to be limiting, and the technical scope of the present disclosure is not limited by these embodiments.

The scope of protection of the present disclosure should be interpreted by the appended claims, and it should be interpreted that all the technical spirit within the equivalent scope is included in the scope of protection of the present disclosure.

### [LIST OF REFERENCE NUMERALS]

| | | | |
|---|---|---|---|
| 10: | Electrode assembly | 12: | Electrode lead |
| 14: | Insulation portion | 20: | Battery case |
| 21: | Folding portion | 22: | Accommodation portion |
| 23: | First terrace portion | 26: | Second terrace portion, Side portion |
| 30: | Fixing member | 31: | First adhesion portion |
| 32: | Second adhesion portion | 33: | Connection portion |
| 40: | Cut-off line | 41: | Hole |
| 50: | Sub cut-off line | 51: | Hole |

## Claims

1. A secondary battery comprising:
an electrode assembly;
a battery case including an accommodation portion accommodating the electrode assembly, and a side portion located at an outer side of the accommodation portion and folded at least once; and
a fixing member attached to the battery case and configured to fix the side portion in the folded state,
wherein the fixing member has a cut-off line to allow the fixing member to easily rupture when an external force is applied to the fixing member.

2. The secondary battery according to claim 1,
wherein the cut-off line is formed by forming a hole in the fixing member at a predetermined interval in a direction.

3. The secondary battery according to claim 1,
wherein the cut-off line is extended in a length direction of the side portion.

4. The secondary battery according to claim 1,
wherein the fixing member further has a sub cut-off line extended in a direction crossing the cut-off line.

5. The secondary battery according to claim 4,
wherein the sub cut-off line is formed at a predetermined interval in an extension direction of the cut-off line.

6. The secondary battery according to claim 1,
wherein the cut-off line is formed at a location corresponding to a gap or a boundary between the accommodation portion and the side portion.

7. The secondary battery according to claim 1,
wherein the fixing member includes:
a first adhesion portion adhered to the accommodation portion;
a second adhesion portion adhered to the side portion; and
a connection portion connecting the first adhesion portion and the second adhesion portion.

8. The secondary battery according to claim 7,
wherein the cut-off line is formed in the connection portion.

9. The secondary battery according to claim 7,
wherein the connection portion includes:
a first connection portion located at a side where the side portion is folded and having the cut-off line; and
a second connection portion located at an opposite side to the first connection portion with respect to the second adhesion portion.

10. A method for manufacturing a secondary battery, the method comprising the steps of:
folding a side portion of a battery case accommodating an electrode assembly at least once;
preparing a fixing member having a cut-off line along a preset direction; and
attaching the fixing member to the battery case to fix the side portion in a folded state.

11. The method for manufacturing the secondary battery according to claim 10,
wherein the step of attaching the fixing member comprises attaching the fixing member such that the cut-off line is parallel to a length direction of the side portion.

12. The method for manufacturing the secondary battery according to claim 10,
wherein the step of attaching the fixing member comprises attaching the fixing member such that the cut-off line corresponds to a gap or a boundary between the accommodation portion accommodating the electrode assembly and the side portion.
